# EUROPÄISCHE PATENTSCHRIFT

(11) **EP 2 920 236 B1**
(45) Veröffentlichungstag und Bekanntmachung des Hinweises auf die Patenterteilung: **05.06.2019**
(21) Anmeldenummer: 13791836.3
(22) Anmeldetag: 18.11.2013
(51) Int. Cl.: C08K 5/00, C08J 3/22, C08J 5/00, C08K 3/04

(54) **POLYMERZUSAMMENSETZUNG MIT VERBESSERTER LANGZEITSTABILITÄT, HIERAUS HERGESTELLTE FORMTEILE SOWIE VERWENDUNGSZWECKE**
POLYMER COMPOSITION HAVING IMPROVED LONG-TERM STABILITY, MOULDED PARTS PRODUCED THEREFROM AND INTENDED USES THEREOF
COMPOSITION POLYMÈRE À STABILITÉ À LONG TERME AMÉLIORÉE, PIÈCES MOULÉES FABRIQUÉES À PARTIR DE CETTE COMPOSITION, ET UTILISATIONS POSSIBLES

(30) Priorität: 19.11.2012 DE 102012022482
(43) Veröffentlichungstag der Anmeldung: 23.09.2015
(73) Patentinhaber: FRAUNHOFER-GESELLSCHAFT zur Förderung der angewandten Forschung e.V., 80636 München (DE)
(72) Erfinder: PFAENDNER, Rudolf, 64668 Rimbach (DE); METZSCH-ZILLINGEN, Elke, 54584 Feusdorf (DE)
(74) Vertreter: Pfenning, Meinig & Partner mbB
(86) Internationale Anmeldenummer: PCT/EP2013/074058
(87) Internationale Veröffentlichungsnummer: WO 2014/076273

(56) Entgegenhaltungen:
- EP-A1- 2 426 163
- WO-A2-2012/089998
- DE-A1-102007 040 927
- DE-A1-102009 047 030
- DINTCHEVA N TZ ET AL: "Photo-oxidation behaviour of polyethylene/multi-wall carbon nanotube composite films", POLYMER DEGRADATION AND STABILITY, BARKING, GB, Bd. 94, Nr. 2, 10. März 2008 (2008-03-10), Seiten 162-170, XP025868891, ISSN: 0141-3910, DOI: 10.1016/J.POLYMDEGRADSTAB.2008.11.012 [gefunden am 2008-11-27]

## Beschreibung

Die vorliegende Erfindung betrifft eine Polymerzusammensetzung mit verbesserter Langzeitstabilität, die mindestens ein thermoplastisches Polymer, Kohlenstoffnanoröhren, mindestens ein Antioxidans sowie mindestens ein weiteres Additiv enthält bzw. hieraus besteht. Zudem betrifft die vorliegende Erfindung, Formteile die aus den erfindungsgemäßen Polymerzusammensetzungen hergestellt werden können. Die Erfindung gibt ebenso Verwendungsmöglichkeiten der Polymerzusammensetzung bzw. der Formteile an.

Kohlenstoff-Nanoröhrchen (Carbon Nanotubes, CNTs) sind eine Additivklasse, die in Kunststoffen (und Beschichtungen) in zunehmendem Maße eingesetzt wird, um die mechanischen und elektrischen Eigenschaften zu verbessern. So kann beispielsweise unter dem Zusatz von 1 % CNTs die Zugfestigkeit des Kunststoffs um 50 % und mehr erhöht werden. Ebenso nimmt damit die elektrische Leitfähigkeit eines Kunststoffs um mehrere Größenordnungen zu (s. z.B. Z. Spitalsky et al, Progr. Pol. Sci. 2010, 35, 357-401).

Kunststoffverbunde, sog. Composite, die Kohlenstoff-Nanoröhrchen enthalten, werden aufgrund der hervorragenden Eigenschaftskombinationen, aber auch aufgrund der damit verbundenen Kosten vorzugsweise in LangzeitAnwendungen eingesetzt. Es ist daher erforderlich, dass das Eigenschaftsbild dieser CNT-Composite über den Anwendungszeitraum erhalten bleibt. Die Langzeitstabilität von Kunststoffen wird üblicherweise durch den Zusatz von Stabilisatoren wie z.B. Antioxidantien sichergestellt (s. z.B. Plastics Additives Handbook, Herausgeber H. Zweifel, 5. Auflage. München 2001). Enthalten Rezepturen CNTs so stellt man jedoch fest, dass durch den Zusatz von üblichen Antioxidantien keine ausreichende Langzeitstabilität des CNT-Composites erreicht wird.

Kohlenstoff-Nanoröhrchen verfügen wie andere klassische Kohlenstoffverbindungen wie Ruß über eine antioxidative Wirkung in Kunststoffen (s. z.B. P.C.P. Watts et al. J. Mater. Sci. 2003, 13, 491-495, X. Shi et al. Carbon 2012, 50, 1005-1013,), die jedoch im Vergleich zu konventionellen phenolischen Antioxidantien als sehr schwach einzustufen ist. Weiterhin kann die (geringe) Wirkung noch durch Oberflächenmodifizierung verbessert werden. Diese Erkenntnisse wurden allerdings mit hochreinen CNT-Produkten gewonnen, die bei kommerziellen Anwendungen aus Kostengründen nicht eingesetzt werden. Bei kommerziellen Kohlenstoff-Nanoröhrchen wird daher ein Verlust der antioxidativen Eigenschaft festgestellt (E.B. Zeynalov et al. The open Materials Science J. 2008, 2, 28-34). Die Verwendung von handelsüblichen Antioxidantien in Kunststoff-Formulierungen, die CNTs enthalten, wird daher in Patenten/Patentanmeldungen erwähnt (z.B. CN 102585429, WO 2012089998, CN 102342869, CN 102344598, CN 102250400, CN 102115558, CN 102382453, CN 102115530).

Ausgehend hiervon ist es Aufgabe der vorliegenden Erfindung, eine Kohlenstoff-Nanoröhrchen-haltige Polymerzusammensetzung anzugeben, die verglichen mit aus dem Stand der Technik bekannten Kohlenstoff-Nanoröhrchenhaltigen Polymerzusammensetzungen eine verbesserte Langzeitstabilität aufweist. Ebenso ist es Aufgabe der vorliegenden Erfindung, aus entsprechenden Polymerzusammensetzungen hergestellte Formteile bzw. entsprechende Verwendungszwecke zu beschreiben.

Die Aufgabe wird bezüglich der Polymerzusammensetzung mit den Merkmalen des Patentanspruchs 1, hinsichtlich der Weiterverarbeitung dieser Zusammensetzung mit den Merkmalen des Patentanspruchs 10 sowie bezüglich eines Formteils mit den Merkmalen des Patentanspruchs 14 gelöst. Die abhängigen Patentansprüche stellen dabei vorteilhafte Weiterbildungen dar.

Erfindungsgemäß wird somit eine Polymerzusammensetzung nach Anspruch 1 bereitgestellt, die
a) mindestens ein thermoplastisches Polymer oder ein Blend aus mindestens zwei thermoplastischen Polymeren,
b) Kohlenstoff-Nanoröhren,
c) mindestens ein Antioxidans, ausgewählt aus der Gruppe bestehend aus Phenolen, Phosphiten und/oder Phosphoniten, Aminen oder Gemischen oder Kombinationen hieraus, sowie
d) mindestens einen Metalldesaktivator und/oder mindestens eine mono- oder polyfunktionelle Epoxidverbindung
enthält oder hieraus besteht.

Überraschenderweise wurde festgestellt, dass entsprechende Polymerzusammensetzungen eine erhöhte Alterungsbeständigkeit aufweisen, die neue Anwendungsmöglichkeiten und Einsatzbereiche ermöglicht. Die erfindungsgemäßen Polymerzusammensetzungen sind aufgrund ihrer hohen Alterungsbeständigkeit insbesondere für Langzeitanwendungen von Bedeutung.

Geeignete thermoplastische Polymere sind:
a) Polymere aus Olefinen oder Diolefinen wie z.B. Polyethylen (LDPE, LLDPE, VLDPE, MDPE, HDPE, mPE), Polypropylen, Polyisobutylen, Poly-4-methylpenten-1, Polybutadien, Polyisopren, Polycycloocten, sowie polyolefinbasierte Copolymere in Form von statistischen oder Blockstrukturen wie z.B. Polypropylen-Polyethylen (EP), EPM oder EPDM, Ethylen-Vinylacetat (EVA), Ethylen-Acrylester.
b) Polystyrol, Polymethylstyrol, Styrol-Butadien, Poly(styrol-butadien-styrol) (SBS), Poly(styroi-isopren), Poly(styrol-isopren-styrol) (SIS), Poly(styrol-butadien-acrylnitrif) (ABS), Poly(styrol-acrylnitril-acrylat) (ASA), Poly(methacrylat-butadien-styrol) (MBS), Styrol-Maleinsäureanhydrid-Polymere einschl. entsprechender Pfropfcopolymere wie z.B. Styrol auf Polybutadien oder Maleinsäureanhydrid auf SBS, sowie den daraus erhältlichen hydrierten Polymeren wie z.B. Poly(styrol-ethylen-butylen-styrol)
c) Halogenenthaltende Polymere wie z.B. Polyvinylchlorid, Polyvinylidenchlorid und/oder chloriertes Polyethylen
d) Polymere von ungesättigten Estern wie z.B. Polyacrylate und Polymethacrylate wie PMMA, Polyacrylnitril und/oder Polyacrylamid
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen
g) Polyphenylenoxide und Blends mit Polystyrol und/oder Polyamiden
h) Polyurethane, insbes. lineare Polyurethane
i) Polyamide wie z.B. Polyamid-6, 6.6., 6.10. 4.6, 6.12, 12.12., Polyamid 11, Polyamid 12 sowie (teil-)aromatische Polyamide wie z.B. Polyphthalamide
j) Polyimide, Polyamidimide, Polyetherimide, Polyketone, Polysulfone, Polyethersulfone, Polyphenylensulfid, Polybenzimidazole
k) Polyester wie z.B. Polyethylenterephthalat (PET), Polpropylenterephthalat Polybutylenterephthalat (PBT) und Polymilchsäure (PLA)
l) Polycarbonat
m) Cellulosederivate wie z.B. Cellulosenitrat, Celluloseacetat, Cellulosepropionat
n) sowie Mischungen, Kombinationen oder Blends aus zwei oder mehr der zuvor genannten Polymeren.

Besonders bevorzugte thermoplastische Polymere sind dabei Polypropylen, Polyethylen sowie ihre Copolymeren, Polystyrole sowie Copolymere hiervon, z.B, Poly(acrylnitril-butadien-styrol) (ABS), Poly(styrol-butadien) (SB) und Poly(styrol-butadien-styrol) (SBS), Polyamide, Polyester, Polycarbonate sowie Mischungen oder Blends hiervon.

Die Kohlenstoffnanoröhren sind bevorzugt ausgewählt aus der Gruppe bestehend aus Multiwall-Kohlenstoff-Nanoröhren.

Die erfindungsgemäß in der Polymerzusammensetzung enthaltenen Phenole sind bevorzugt ausgewählt aus der Gruppe bestehend aus Verbindungen der nachstehend abgebildeten Formel 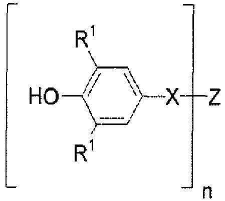 wobei
- R¹: bei jedem Auftreten gleich oder verschieden ist und ausgewählt ist aus der Gruppe bestehend aus Wasserstoff, linearen oder verzweigten Alkylresten mit 1 bis 8 Kohlenstoffatomen, insbesondere tert-Butyl oder Methyl,
- X: ausgewählt ist aus der Gruppe bestehend aus Alkylenresten, Alkylen-Carbonyl-Resten, Alkylen-Amid-Resten,
- n: 1 bis 4 ist, und
- Z: für den Fall dass n = 1 Wasserstoff ist, für den Fall, dass n = 2 eine chemische Bindung oder ein Alkylen ist, für den Fall, dass n = 3 ein Alkinyl ist oder für den Fall, dass n = 4 ein Kohlenstoffatom ist.

Insbesondere geeignete Verbindungen, die als phenolisches Antioxidans eingesetzt werden können, sind dabei die folgenden:

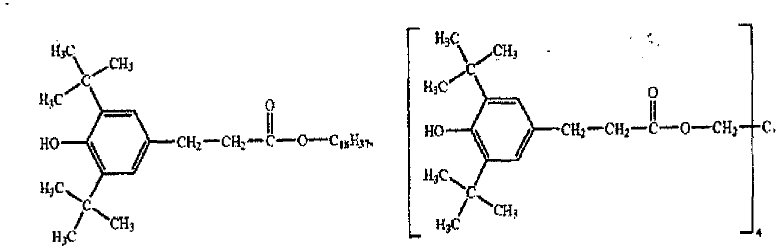

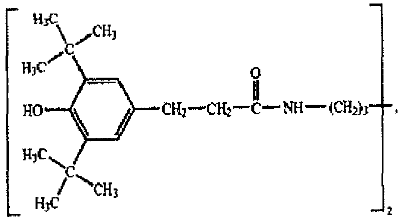

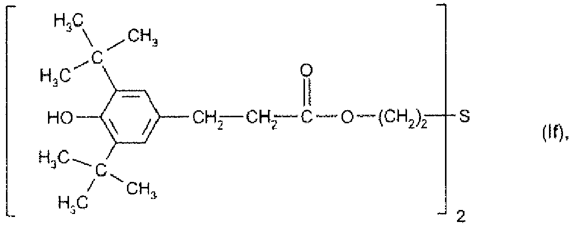

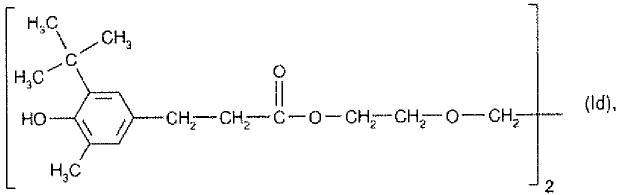

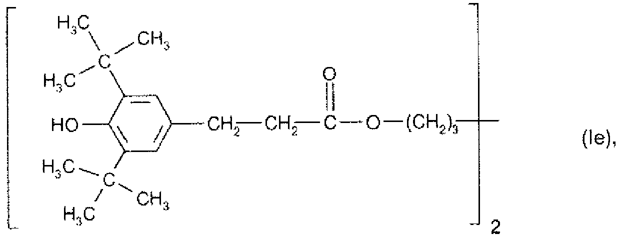

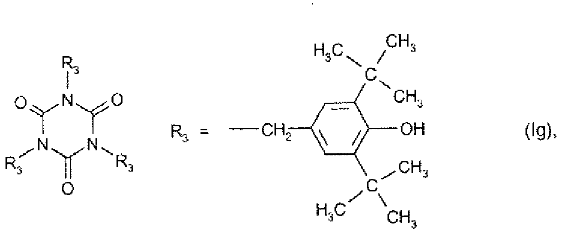

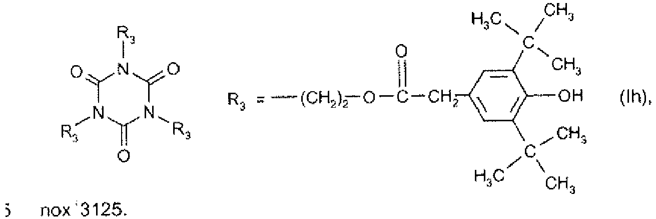

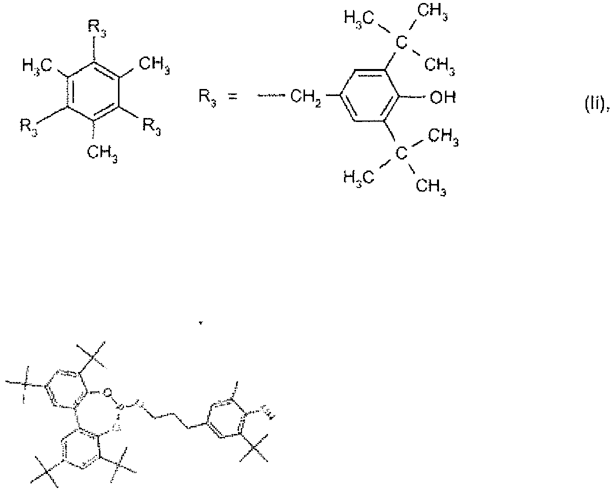

Die genannten Antioxidantien sind im Handel erhältlich beispielsweise unter den Handelsnamen Irganox (BASF SE), Songnox (Songwon), ADKstab (Adeka) oder Hostanox (Clariant).

Die Phosphite bzw. Phosphonite, die in der erfindungsgemäßen Zusammensetzung enthalten sein können, sind bevorzugt ausgewählt aus Verbindungen der nachstehend abgebildeten Formeln 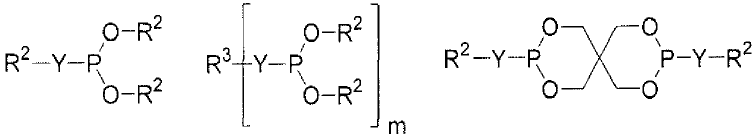 wobei jeweils
- R²: bei jedem Auftreten gleich oder verschieden ist und ausgewählt ist aus der Gruppe bestehend aus Alkyl-, Aryl- oder alkylierten Arlysubstituenten, wobei für den Fall, dass an ein Phosphoratom zwei -Q-R² Substituenten gebunden sind, zwei Reste R² auch zu einem Ringsystem miteinander verbunden sein können,
- Y: Sauerstoff oder eine chemische Bindung ist,
- m: 1 oder 2 ist,
- R³: für den Fall, dass m = 1 ein Alkyl- oder ein Arylrest, oder für den Fall, dass m = 2 ein Alkylen- oder Arylenrest ist.

Typische Beispiele für derartige Verbindungen sind die nachfolgend abgebildeten Verbindungen:

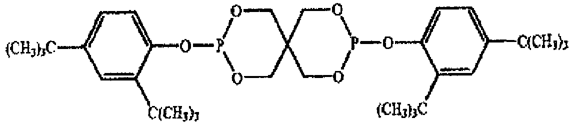

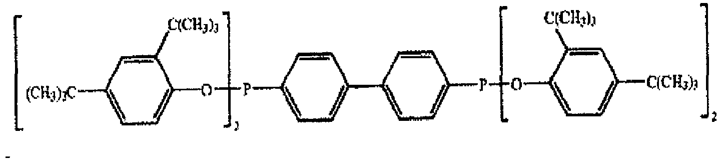

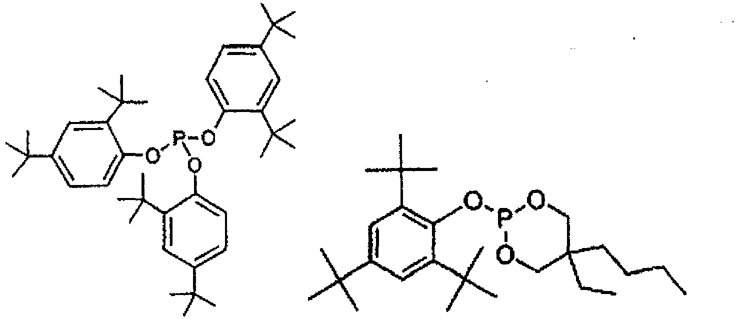

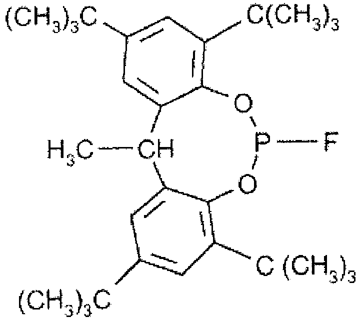

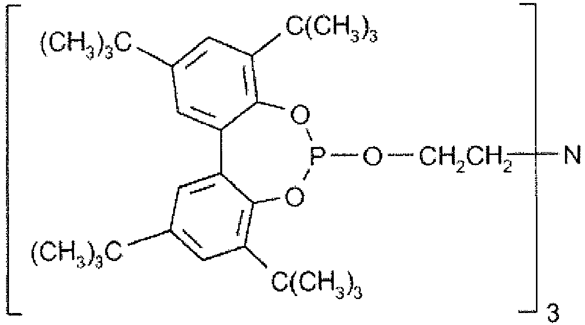

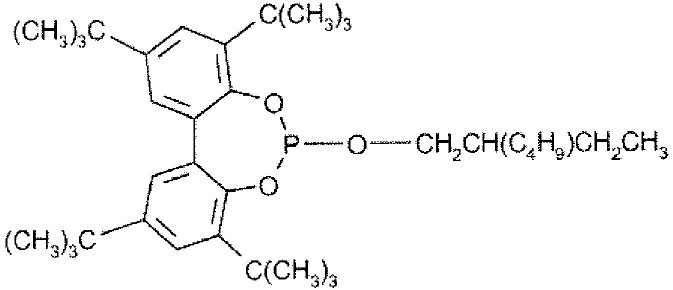

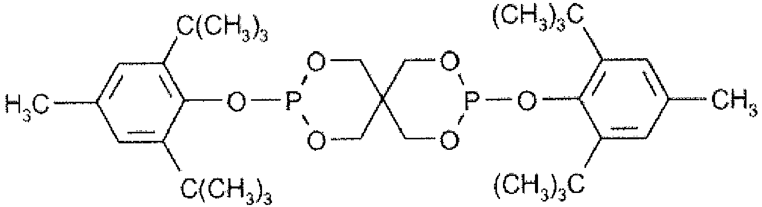

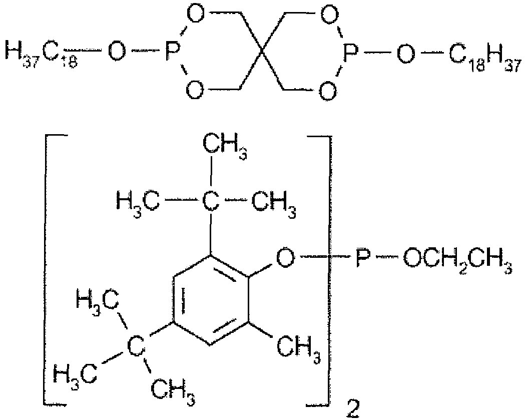

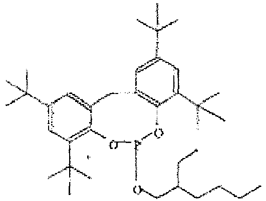

Die genannten Phosphite/Phosphonite sind bspw. Unter den Handelsnamen Irgafos (BASF SE), Songnox (Songwon), ADK stab (Adeka), Hostanox (Clariant), Sandostab (Clariant) erhältlich.

Die Amine, die als Antioxidantien in der erfindungsgemäßen Polymerzusammensetzung enthalten sind, sind ausgewählt aus der Gruppe bestehend aus N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Tolnolsulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetra-methyl-4,4'-diaminodiphenylmethan, 1,2-Bis[(2-methylphenyl)amino]ethan, 1,2-Bis(phenylamino)propan, (o-Tolyl)biguanid, Bis[4-(1',3'-dimethylbutyl)phenyl]amin, Tert-octyliertes N-phenyl-1-naphthylamin, ein Gemisch aus mono- und dialkylierten Tert-butyl/Tert-octyldiphenylamin, ein Gemisch aus mono- und dialkylierten Nonyldiphenylamin, ein Gemisch aus mono- und dialkylierten Dodecyldiphenylaminen, ein Gemisch aus mono- und dialkylierten isopropyl/lsohexyl-diphenylaminen, ein Gemisch aus mono- und dialkylierten Tert-butyldiphenylaminen, 2,3-Dihydro-3,3-dimethyl-4H-1,4-benzothiazin, Phenothiazin, ein Gemisch aus mono- und dialkylierten Tert-butyl/Tert-octylphenothiazinen, ein Gemisch aus mono- und dialkylierten Tert-octylphenothiazinen, N-Allylphenothiazin, N,N,N',N'-Tetraphenyl-1,4-diaminobut-2-en sowie Mischungen oder Kombinationen hiervon.

Typische Beispiele für derartige Amine und erfindungsgemäß besonders bevorzugt sind die nachfolgend abgebildeten Verbindungen:

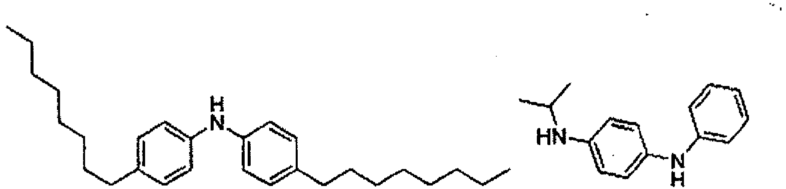

Eine weitere Gruppe von aminischen Antioxidantien sind Hydroxylamine bzw. N-oxide (Nitrone), wie z.B. N,N-dialkylhydroxylamine, N,N-dibenzylhydroxylamin, N,N-dilaurylhydroxylamin, N,N-distearylhydroxylamin, N-benzyl-alpha-phenylnitron, N-octadecyl-alpha-hexadecylnitron, sowie Genox EP (Chemtura) der Formel:

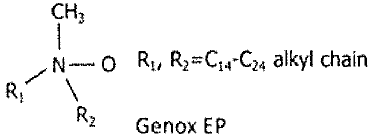

Die Metalldesaktivatoren, die in den erfindungsgemäßen Polymerzusammensetzungen eingesetzt werden können, sind dabei bevorzugt ausgewählt aus der Gruppe bestehend aus N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxylyldihydrazid, N,N'-Bis(salicyloyl)thiopropionyldihydrazid. sowie Mischungen oder Kombinationen.

Typische Beispiele für derartige Metalldesaktivatoren sind die nachfolgend abgebildeten Verbindungen:

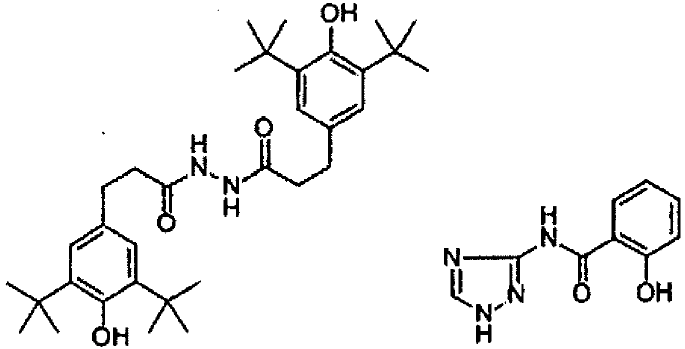

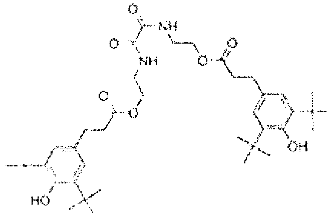

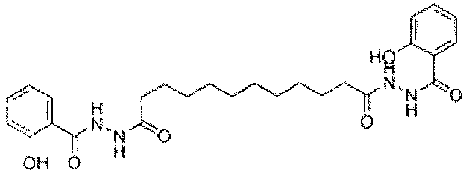

Bevorzugte mono- oder polyfunktionelle Epoxidverbindungen, die erfindungsgemäß in der Polymerzusammensetzung Verwendung finden, enthalten dabei eine nachfolgend abgebildete Gruppierung gemäß der folgenden Formel 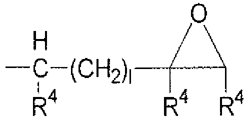 wobei
- R⁴: bei jedem Auftreten gleich oder verschieden ist und ausgewählt ist aus der Gruppe bestehend aus Wasserstoff oder linearen oder verzweigten Alkylresten mit 1 bis 8 Kohlenstoffatomen, und
- I: 0 oder 1 ist.

Geeignete Verbindungen sind bsp. Bisphenol-A-diglycidylether, Bisphenol-F-diglycidylether, Glycidylether von cycloaliphatischen Alkoholen, Glycidylester von Carbonsäuren, Polyglycidylether von Tetraphenylethan, von Phenol-Formaldehyd-Novolaken und von Cresol-Formaldehyd-Novolaken, Polyglycidylether von Aminen wie z.B. N,N,N',N'-Tetraglycidyldiaminodiphenylmethan.

Insbesondere ist es hierbei bevorzugt, dass bei derartigen Epoxid-Systemen die zuvor beschriebene Gruppierung an ein Polymer oder Copolymer gebunden ist, insbesondere dass es sich bei der mono- oder polyfunktionellen Epoxidverbindung um ein mit der Gruppierung funktionalisiertes Poly(meth)acrylsäurederivat, z.B. in Form eines Glycidylethers oder eines hiervon abgeleiteten Propfcopolymerisat oder ein Copolymer hiervon, bevorzugt ein Copolymer mit Styrol oder (Meth)acrylsäure-Verbindungen handelt.

Bevorzugt sind feste Epoxidverbindungen, insbesondere Copolymere mit Einheiten von epoxyfunktionsalisierten Methacrylsäurederivaten mit nichtfunktionellen Styrol-derivaten oder mit nicht funktionalisierten (Meth)acrylsäure-derivaten.

Derartige Glycidylgruppen enthaltende Polymere sind im Handel erhältlich und werden z.B. unter dem Markennamen Joncryl der Firma BASF SE oder MacroGran der Firma Macro-M angeboten.

Außerdem können in der Zusammensetzung weitere Zusatzstoffe aus der Gruppe der UV-Absorber, der Lichtstabilisatoren, der Benzofuranone, der Polyamid-Stabilisatoren, der Nukleierungsmittel, der Füll- und Verstärkungsstoffe, Schlagzähigkeitsverbesserer, Weichmacher, Gleitmittel, Rheologiemodifikatoren, Verarbeitungshilfsmittel, Pigmente, Farbstoffe, optische Aufheller, Flammschutzmittel, antimikrobielle Wirkstoffe, Antistatika, Slipmittel, Antiblockmittel, Kopplungsmittel, Dispergiermittel, Kompatibilisatoren, Sauerstofffänger, Säurefänger, Markierungsmittel, Antifoggingmittel eingesetzt werden, In bevorzugter Ausführungsform enthalten die Zusammensetzungen insbesondere bei der Gruppe der bevorzugten Polymeren Zusatzstoffe aus der Gruppe der Nukleierungsmittel wie z.B. Sorbitolderivate oder Trisamide, aus der Gruppe der Flammschutzmittel wie z.B. halogenfreie Flammschutzmittel auf Basis von Phosphor- und Stickstoffverbindungen und/oder Säurefänger, z.B. auf Basis von Salzen langkettiger Säuren wie z.B. Calciumstearat, Magnesiumstearat, Zinkstearat oder Calciumlactat oder von Hydrotalciten und/oder Stabilisatoren aus der Gruppe der gehinderten Amine, vorzugsweise N-Alkoxyamine der nachfolgend angegebenen allgemeinen Struktur ist.

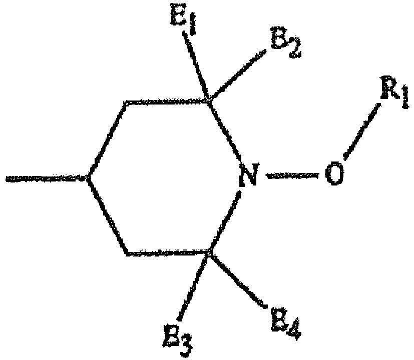

Dabei bedeuten
E1, E2, E3 und E4 bei jedem Auftreten unabhängig voneinander Wasserstoff oder einen linearen oder verzweigten Alkylrest mit 1 bis 8 Kohlenstoffatomen und
R1 einen linearen oder verzweigten Alkylrest mit 1 bis 8 Kohlenstoffatomen.

Geeignete gehinderte Amine sind beispielsweise 1,1-Bis(2,2,6,6-tetramethyl-4-piperidyl)sebazat, Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentannethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin and Succinsäure, lineare oder zyklische Kondensationsprodukte von N,N'-Bis(2,2,6,6-tetramethyl-4-piperidyl )hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorohydrin.

Die erfindungsgemäße Polymerzusammensetzung enthält die beschriebenen Bestandteile bevorzugt in den nachfolgend angegebenen Gewichtsbereichen bzw. besteht hieraus:
a) 85 bis 99,7 Gew.-% des mindestens einen thermoplastischen Polymers oder des Blends aus mindestens zwei thermoplastischen Polymeren,
b) 0,2 bis 11 Gew.-% Kohlenstoff-Nanoröhren,
c) 0,05 bis 1,0 Gew.-% des mindestens einen Antioxidans, sowie
d) 0,05 bis 3 Gew.-% des mindestens einen Metalldesaktivators und/oder der mindestens einen mono- oder polyfunktionelle Epoxidverbindung, sowie
e) 0 bis 3 Gew.-% des mindestens einen Additivs.

Ein weiterer Aspekt der Erfindung besteht in einem Verfahren zur Stabilisierung eines thermoplastisches Polymers gegen oxidativen, thermischen oder licht-induzierten Abbau, der die Einarbeitung oder die Verwendung der Komponenten a, b, c, d sowie ggf. e wie beschrieben umfasst. Die erfindungsgemäße Zusammensetzung stellt somit einen Masterbatch oder Konzentrat dar, der in ein weiteres Polymer eingearbeitet werden kann.

Das Einbringen der erfindungsgemäßen Komponenten a, b, c, d und ggf. der weiteren Zusatzstoffe e) in das Polymer der Wahl erfolgt durch bekannte Methoden wie z.B. durch einen Prozess der in der Schmelze ausgeführt wird oder auch durch gelöste oder dispergierte Komponenten in einem Lösungsmittel und Verdampfen des Lösungsmittels. Die Additive werden vorzugsweise in der Schmelze in einem Extruder eingebracht. Geeignete Verarbeitungsmaschinen sind Einschneckenextruder, Zweischneckenextruder, Planetwalzenextruder, Ringextruder oder Co-Kneter.

Wenn mehrere Komponenten zugeben werden, können diese vorgemischt oder einzeln zugeben werden.

Die Komponenten a, b, c, d sowie ggf. weitere Additive e) können weiterhin dem Polymer in Form eines Konzentrates oder Masterbatches zugegeben werden die eine Mischung in einer Konzentration von 5-75 % enthält, d.h. bezogen auf 100 Gewichtsteile des Polymers werden 5 bis 300 Gewichtsteile der zuvor beschriebenen Polymerzusammensetzung zugegeben bzw. zugeblendet. Dies ist vorteilhaft, da bereits eine vordispergierte Form der Additive vorliegt und im Folgeschritt ein homogeneres Produkt erhalten wird.

Die erfindungsgemäßen Zusammensetzungen werden vorzugsweise für die Herstellung von Formteilen, wie z.B. durch Spritzguss, Roto-Molding, Blasformen, Pressverfahren sowie für die Extrusion von z.B. Profilen, Folien, Filmen, Bändern, Beschichtungen, Kabeln und Rohren, Fasern oder Schäumen eingesetztEin weiterer Einsatzbereich sind Lacke, Farben und Beschichtungen (Coatings).

Zudem betrifft die Erfindung die Verwendung der zuvor beschriebenen Polymerzusammensetzung in Form von Spritzgußteilen Folien, Filmen, Beschichtungen, Schäumen, Fasern, Kabeln und Rohren in der Elektro/Elektronikindustrie, im Transport- und Bauwesen, in der Verpackungsindustrie, bei Haushaltsgeräten, Konsumartikeln, Möbeln, Sportgeräten, Textilanwendungen, Lacken und Farben.

Die vorliegende Erfindung wird anhand der nachfolgenden Ausführung näher beschrieben, ohne die Erfindung auf die dargestellten Beispiele zu beschränken.

### Ausführungsbeispiele:

Die Extrusionen von Polypropylen (Moplen HP 500N, Hersteller: Lyondell-Basell) mit einem Kohlenstoffnanoröhrchen-Masterbatch (CPM200GPP001, Hersteller: C-Polymers GmbH) mit den in der Tabelle verzeichneten Additiven, erfolgten bei einer maximalen Temperatur von 200° C und einer Schneckendrehzahl von 500 U/min auf einem Doppelschneckenextruder ZSK 18 des Herstellers Coperion. Das erhaltene Granulat wurde zu Prüfkörpern (Zugstab nach DIN/ISO 527-1) mittels Spritzguß (Arburg Allrounder 320 A-600-170) verarbeitet. Die Prüfkörper wurden dann in einem Umluft- Trockenschrank bei 150° C gelagert und die Zeit bis zum mechanischen Versagen der Prüfkörper (Stunden bis Versprödung) bestimmt.

**Tabelle 1: Zusammensetzungen in Polypropylen und Ergebnisse der Alterungsprüfung**

| Beispiel | Konzentration: Kohlenstoff-Nanoröhrchen [%] | Zusammensetzung und Konzentration Additive | Stunden bis Versprödung |
|---|---|---|---|
| Vergleichsbeispiel 1 | 0 | 0.1 % AO-1 + 0.1 % P-1 | 672 |
| Vergleichsbeispiel 2 | 0 | 0.25 % AO-1 + 0.25 % P-1 | > 1000 |
| Vergleichsbeispiel 3 | 1 | 0.1 % AO-1 + 0.1 % P-1 | 326 |
| Vergleichsbeispiel 4 | 5 | 0.1 % AO-1 + 0.1 % P-1 | 305 |
| Vergleichsbeispiel 5 | 5 | 0.25 % AO-1 + 0.25 % P-1 | 305 |
| Erfindungsgemäßes Beispiel 1 | 1 | 0.1 % AO-1 + 0.1 % P-1 + 1 % Epoxid-Copolymer | 542 |
| Erfindungsgemäßes Beispiel 2 | 1 | 0.1 % AO-1 + 0.1 % P-1 + 0.3 % MD | 624 |
| Erfindungsgemäßes Beispiel 3 | 5 | 0.1 % AO-1 + 0.1 % P-1 + 0.3 % MD + 1 % Epoxid-Copolymer | 398 |
| Erfindungsgemäßes Beispiel 4 | 1 | 0.1 % AO-1 + 0.1 % P-1 + 1 % Bisphenol-A-diglycidyletherharz | 446 |

| | | | |
|---|---|---|---|
| AO-1 = Pentaerythritol tetrakis(3-(3,5-di-tert-butyl-4-hydroxyphenyl)-propionat, P-1 = Tris(2,4-di-tert-butylphenyl)phosphit, MD = Benzolpropansäure , 3,5-bis(1,1-dimethylethyl)-4-hydroxy-, 2-[3-[3,5-bis(1,1-dimethylethyl)-4-hydroxyphenyl]-1-oxopropyl)hydrazide, Epoxid-Copolymer = Joncryl AD 4368 CS (Hersteller: BASF SE), Bisphenol-A-diglycidyletherharz = Araldite GT 7072 (Hersteller: Huntsman) | | | |

Durch Zusatz von Kohlenstoff-Nanoröhrchen verringert sich deutlich die Alterungsbeständigkeit des Kunststoffs (Vergleichsbeispiele). Eine Erhöhung der Konzentration von Antioxidantien (Vergleichsbeispiele 4 und 5) führt zu keiner Verbesserung der Alterungsbeständigkeit. Überraschenderweise weisen die erfindungsgemäßen Zusammensetzungen, die entweder einen Metalldeaktivator (Erfindungsgemäße Beispiele 2 und 3) oder eine mono- oder polyfunktionelle Epoxidverbindung (Erfindungsgemäße Beispiele 1, 3 und 4) beinhalten eine erhöhte Alterungsbeständigkeit auf.

In weiteren Beispielen wurden Zusammensetzungen analog der Beispiele 1-5 hergestellt und die mechanischen Eigenschaften in Abhängigkeit von der Lagerzeit im Umlufttrockenschrank bei 150 °C untersucht (Tabelle 2).

| | CNT [%] | Additive [%] | ZF [MPa] 0h | ZF [MPa] 48 h | ZF [MPa] 101 h | ZF [MPa] 167 h | ZF [MPa] 240 h | ZF [MPa] 315 h |
|---|---|---|---|---|---|---|---|---|
| Vergleich 6 | 0 | 0.1% AO-1 + 0.1%P-1 | 37.2 | 32.8 | | 33.3 | | 35.2 |
| Vergleich 7 | 1 | 0.1 % AO-1+0.1% P-1 | 35.6 | 34.7 | 34.4 | 34.5 | 19 | 0 |
| Vergleich 8 | 5 | 0.25 % AO-1 + 0.25 % P-1 | 39.0 | 38.1 | 37 | 8.7 | 0 | |
| Vergleich 9 | 5 | 0.1 % AO-1+0.1% P-1 | 38.7 | 37.1 | 23.9 | 0 | | |
| Erfbsp. 5 | 1 | 0.1 % AO-1 + 0.1 % P-1 + 1 % Epoxid-Copolymer | 35.5 | 35 | | 34.4 | 36.1 | 35.8 |
| Erfbsp. 6 | 1 | 0.1 % AO-1 + 0.1% P-1 + 0.3 % MD | 36.5 | 34.8 | | 35.1 | 36.3 | 14.2 |
| Erfbsp. 7 | 5 | 0.1 % AO-1 + 0.1% P-1 + 1% Epoxid-Copolymer | 39.4 | 37.3 | 37.3 | 24.8 | 1.1 | 0 |
| Erfbsp. 8 | 5 | 0.1 % AO-1 + 0.1 % P-1 + 1% Epoxid-Copolymer + 0.3 % MD | 39.2 | 37.6 | | 31.8 | 9.3 | 0 |

| | | | | | | | | |
|---|---|---|---|---|---|---|---|---|
| ZF = Zugfestigkeit nach Lagerzeit im Umluftofen bei 150 °C, bestimmt nach ISO 527. | | | | | | | | |

Es zeigt sich, dass CNTs die Alterungsstabilität von Kunststoffen drastisch verringern (Vergleichsbeispiele 7-9 im Vergleich zu Vergleichsbeipiel 6 ohne CNTs), d.h. eine Verringerung der mechanischen Eigenschaften, gezeigt anhand der Zugfestigkeit findet zu einem deutlich früheren Zeitpunkt statt. Durch die erfindungsgemäßen Zusätze (Erfindungsgemäße Beispiele 5-8) können die mechanischen Eigenschaften über einen längeren Zeitraum aufrecht erhalten werden.

## Patentansprüche

1. Polymerzusammensetzung mit verbesserter Langzeitstabilität, enthaltend oder bestehend aus
a) mindestens ein thermoplastisches Polymer oder ein Blend aus mindestens zwei thermoplastischen Polymeren,
b) Kohlenstoff-Nanoröhren
c) mindestens ein Antioxidans, ausgewählt aus der Gruppe bestehend aus Phenolen, Phosphiten und/oder Phosphoniten, Aminen ausgewählt aus der Gruppe bestehend aus N,N'-Di-isopropyl-p-phenylendiamin, N,N'-Di-sec-butyl-p-phenylendiamin, N,N'-Bis-(1,4-dimethylpentyl)-p-phenylen-diamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylen-diamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Tolnolsulfamoyl)diphenylamin, N,N'-Dimethyl-N,N'-di-sec-butyl-p-phenylendiamin, Diphenylamin, N-Allyldiphenyl-amin, 4-lsopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylamino-phenol, 4-Butyrylaminophenol, 4-Nonanoylaminophenol, 4-Dode-canoylaminophenol, 4-Octadecanoylaminophenol, Bis(4-methoxy-phenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)-amino]ethan, 1,2-Bis(phenylamino)propan, (o-Tolyl)biguanid, Bis[4-(1',3'-dimethylbutyl)-phenyl]amin, Tert-octyliertes N-phenyl-1-naph-thylamin, ein Gemisch aus mono- und dialkylierten Tert-butyl/Tert-octyldiphenylamin, ein Gemisch aus mono- und dialkylierten Nonyldiphenylamin, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten Tert-butyldiphenylaminen, 2,3-Dihydro-3,3-dimethyl-4H-1,4-benzothiazin, Phenothiazin, ein Gemisch aus mono- und dialkylierten Tert-butyl/Tert-octylphenothiazinen, ein Gemisch aus mono- und dialkylierten Tert-octylphenothiazinen, N-Allylphenothiazin, N,N,N',N'-Tetraphenyl-1,4-diaminobut-2-en sowie Mischungen oder Kombinationen hiervon; oder Gemischen oder Kombinationen hieraus, sowie
d) mindestens einen Metalldesaktivator und/oder mindestens eine mono- oder polyfunktionelle Epoxidverbindung.

2. Polymerzusammensetzung nach Anspruch 1, **dadurch gekennzeichnet, dass** das mindestens eine thermoplastische Polymer ausgewählt aus der Gruppe bestehend aus
a) Polymere aus Olefinen oder Diolefinen, insbesondere Polyethylen (LDPE, LLDPE, VLDPE, MDPE, HDPE, mPE), Polypropylen, Polyisobutylen, Poly-4-methyl-penten-1, Polybutadien, Polyisopren, Polycycloocten, sowie polyolefinbasierte Copolymere in Form von statistischen oder Blockstrukturen wie z.B. Polypropylen-Polyethylen (EP), EPM oder EPDM, Etthylen-Vinylacetat (EVA), Ethylen-Acrylester,
b) Polystyrol, Polymethylstyrol, Styrol-Butadien, Poly(styrol-butadien-styrol) (SBS), Poly(styrol-isopren), Poly(styrol-isopren-stryrol) (SIS), Poly(styrol-butadien-acrylnitril) (ABS), Poly(styrol-acrylnitrilacrylat) (ASA), Poly(methacrylat-butadien-styrol) (MBS), Styrol-Maleinsäureanhydrid-Polymere, insbesondere entsprechender Pfropfcopolymere wie z.B. Styrol auf Butadien oder Maleinsäureanhydrid auf SBS, sowie den daraus erhältlichen hydrierten Polymeren, wie z.B. Poly(styrol-ethylen-butylen-styrol),
c) Halogenenthaltende Polymere, insbesondere Polyvinylchlorid, Polyvinylidenchlorid und/oder chloriertes Polyethylen,
d) Polymere von ungesättigten Estern wie z.B. Polyacrylate und Polymethacrylate wie PMMA, Polyacrylnitril und/oder Polyacrylamid,
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen,
g) Polyphenylenoxide und Blends mit Polystyrol und/oder Polyamiden,
h) Polyurethane, insbes. lineare Polyurethane,
i) Polyamide wie z.B. Polyamid-6, 6.6., 6.10. 4.6, 6.12, 12.12., Polyamid 11, Polyamid 12 sowie (teil-)aromatische Polyamide wie z.B. Polyphthalamide,
j) Polyimide, Polyamidimide, Polyetherimide, Polyketone Polysulfone, Polyethersulfone, Polyphenylensulfid, Polyenzimidazole,
k) Polyester wie z.B. Polyethylenterephthalat (PET), Polypropylenterephthalat, Polybutylenterephthalat (PBT) und Polymilchsäure (PLA),
l) Polycarbonat
m) Cellulosederivate wie z.B. Cellulosenitrat, Celluloseacetat, Cellulosepropionat
n) sowie Mischungen, Kombinationen oder Blends zweier oderer mehrerer der zuvor genannten Polymeren.

3. Polymerzusammensetzung nach einem der vorhergehenden Ansprüche, **dadurch gekennzeichnet, dass** die Kohlenstoffnanoröhren ausgewählt sind aus der Gruppe bestehend aus Multiwall-Kohlenstoff-Nanoröhren.

4. Polymerzusammensetzung nach einem der vorhergehenden Ansprüche, **dadurch gekennzeichnet, dass** die Phenole ausgewählt sind aus der Gruppe bestehend aus Verbindungen der nachstehend abgebildeten Formel 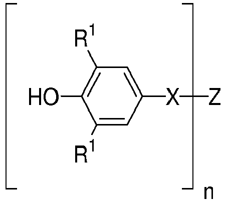 wobei
R¹ bei jedem Auftreten gleich oder verschieden ist und ausgewählt ist aus der Gruppe bestehend aus linearen oder verzweigten Alkylresten mit 1 bis 8 Kohlenstoffatomen, insbesondere tert-Butyl oder Methyl; oder Wasserstoff,
X ausgewählt ist aus der Gruppe bestehend aus Alkylenresten, Alkylen-Carbonyl-Resten, Alkylen-Amid-Resten,
n 1 bis 4 ist, und
Z für den Fall dass n = 1 Wasserstoff ist, für den Fall, dass n = 2 eine chemische Bindung oder ein Alkylen ist, für den Fall, dass n = 3 ein Alkinyl ist oder für den Fall, dass n = 4 ein Kohlenstoffatom ist.

5. Polymerzusammensetzung nach einem der vorhergehenden Ansprüche, **dadurch gekennzeichnet, dass** die Phosphite und/oder Phosphonite ausgewählt sind aus Verbindungen der nachstehend abgebildeten Formeln 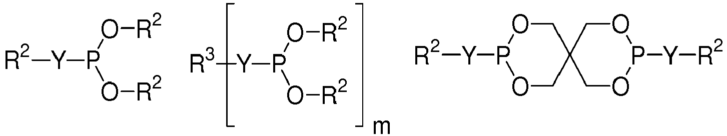 wobei jeweils
R² bei jedem Auftreten gleich oder verschieden ist und ausgewählt ist aus der Gruppe bestehend aus Alkyl-, Aryl- oder alkylierten Arlysubstituenten, wobei für den Fall, dass an ein Phosphoratom zwei -O-R² Substituenten gebunden sind, zwei Reste R² auch zu einem Ringsystem miteinander verbunden sein können,
Y Sauerstoff oder eine chemische Bindung ist,
m 1 oder 2 ist
R³ für den Fall, dass m = 1 ein Alkyl- oder ein Arylrest, oder für den Fall, dass m = 2 ein Alkylen- oder Arylenrest ist.

6. Polymerzusammensetzung nach einem der vorhergehenden Ansprüche, **dadurch gekennzeichnet, dass** die Metalldesaktivatoren ausgewählt sind aus der Gruppe bestehend aus N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyl-dihydrazid, N,N'-Bis(salicyloyl)oxylyldihydrazid, N,N'-Bis(salicyloyl)-thiopropionyldihydrazid sowie Mischungen oder Kombinationen hiervon.

7. Polymerzusammensetzung nach einem der vorhergehenden Ansprüche, **dadurch gekennzeichnet, dass** die mono- oder polyfunktionelle Epoxidverbindungen eine Gruppierung der nachfolgend abgebildeten Formel umfasst 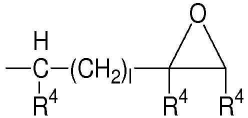 wobei
R⁴ bei jedem Auftreten gleich oder verschieden ist und ausgewählt ist aus der Gruppe bestehend aus Wasserstoff oder linearen oder verzweigten Alkylresten mit 1 bis 8 Kohlenstoffatomen, und
I 0 oder 1 ist.

8. Polymerzusammensetzung nach vorhergehendem Anspruch, **dadurch gekennzeichnet, dass** die Gruppierung an ein Polymer oder Copolymer gebunden ist, insbesondere dass es sich bei der mono- oder polyfunktionellen Epoxidverbindung um ein mit der Gruppierung funktionalisiertes Poly(meth)acrylsäurederivat oder ein Copolymer hiervon, bevorzugt ein Copolymer mit Styrol oder (Meth)acrylsäure-Verbindungen handelt.

9. Polymerzusammensetzung nach einem der vorhergehenden Ansprüche, **dadurch gekennzeichnet, dass** mindestens ein Additiv, ausgewählt aus der Gruppe bestehend aus Nukleierungsmitteln, insbesondere Sorbitolderivaten und/oder Trisamiden; Flammschutzmitteln, insbesondere halogenfreien Flammschutzmitteln auf Basis von Phosphor- und Stickstoffverbindungen; Säurefängern, insbesondere Salzen langkettiger Fettsäuren, insbesondere Calciumstearat oder Zinkstearat oder Hydrotalciten; und/oder Stabilisatoren aus der Gruppe der gehinderten Amine, vorzugsweise N-Alkoxyaminderivate enthalten ist.

10. Polymerzusammensetzung nach einem der vorhergehenden Ansprüche, enthaltend oder bestehend aus, bezogen auf die gesamte Zusammensetzung
a) 82 bis 99,7 Gew.-% des mindestens einen thermoplastischen Polymers oder des Blends aus mindestens zwei thermoplastischen Polymeren,
b) 0,2 bis 11 Gew.-% Kohlenstoff-Nanoröhren,
c) 0,05 bis 1,0 Gew.-% des mindestens einen Antioxidans, sowie
d) 0,05 bis 3 Gew.-% des mindestens einen Metalldesaktivators und/oder der mindestens einen mono- oder polyfunktionelle Epoxidverbindung, sowie
e) 0 bis 3 Gew.-% des mindestens einen Additivs.

11. Verfahren zur Stabilisierung von Polymeren, bei dem eine Polymerzusammensetzung nach einem der Ansprüche 1 bis 10 zu einem Polymer zugeblendet wird.

12. Verfahren nach vorhergehendem Anspruch, **dadurch gekennzeichnet, dass** die Polymere thermoplastische Polymere sind und insbesondere ausgewählt sind aus der Gruppe bestehend aus Polypropylen, Polyethylen und ihre Copolymere, Polystyrolen und Copolymeren wie Acrylnitril-Butadien-Styrol (ABS), Styrol-Butadien (SB) und Styrol-Butadien-Styrol (SBS), Polyurethanen, Polyamiden, Polyestern, Polycarbonaten und/oder Mischungen oder Blends hiervon.

13. Verfahren nach einem der beiden vorhergehenden Ansprüche, **dadurch gekennzeichnet, dass** bezogen auf 100 Gewichtsteile des Polymers 5 bis 300 Gewichtsteile der Polymerzusammensetzung zugeblendet wird.

14. Formteil, herstellbar aus einer Polymerzusammensetzung nach einem der Ansprüche 1 bis 10 oder einem Verfahren nach einem der Ansprüche 11 bis 13, in Form von Spritzgussteilen, Folien, Filmen, Beschichtungen, Schäumen, Fasern, Kabeln und Rohren in der Elektro/Elektronikindustrie, im Transport- und Bauwesen, in der Verpackungsindustrie, bei Haushaltsgeräten, Konsumartikeln, Möbeln, Sportgeräten, Textilanwendungen, Lacken und Farben.

## Claims

1. Polymer composition with improved long-tem stability, comprising or consisting of
a) at least one thermoplastic polymer or a blend of at least two thermoplastic polymers,
b) carbon nanotubes,
c) at least one antioxidant, selected from the group consisting of phenols, phosphites and/or phosphonites, amines selected from the group consisting of N,N'-diisopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-tolnolsulphamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, e.g. p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol), 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamine, a mixture of mono- and dialkylated nonyldiphenylamine, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene and also mixtures or combinations hereof, and also
d) at least one metal deactivator and/or at least one mono- or polyfunctional epoxide compound.

2. Polymer composition according to claim 1, **characterised in that** the at least one thermoplastic polymer is selected from the group consisting of
a) polymers from olefins or diolefins, in particular polyethylene (LDPE, LLDPE, VLDPE, MDPE, HDPE, mPE), polypropylene, polyisobutylene, poly-4-methylpentene-1, polybutadiene, polyisoprene, polycyclooctene, and also polyolefin-based copolymers in the form of statistical or block structures, such as e.g. polypropylene-polyethylene (EP), EPM or EPDM, ethylene vinyl acetate (EVA), ethylene acrylic ester
b) polystyrene, polymethylstyrene, styrene-butadiene, poly(styrene-butadiene-styrene) (SBS), poly(styrene-isoprene), poly(styrene-isoprene-styrene) (SIS), poly(styrene-butadiene-acrylonitrile) (ABS), poly(styrene-acrylonitrile-acrylate) (ASA), poly(methylacrylate-butadiene-styrene) (MBS), styrene-maleic anhydride polymers, in particular corresponding graft copolymers, such as e.g. styrene on butadiene or maleic anhydride on SBS, and also the hydrated polymers obtainable therefrom, such as e.g. poly(styrene-ethylene-butylene-styrene)
c) halogen-containing polymers, in particular polyvinyl chloride, polyvinylidene chloride and/or chlorinated polyethylene
d) polymers of unsaturated esters, such as e.g. polyacrylates and polymethacrylates, such as PMMA, polyacrylonitrile and/or polyacrylamide
e) polymers of unsaturated alcohols and derivatives, such as e.g. polyvinyl alcohol, polyvinyl acetate, polyvinyl butyral
f) polyacetals, such as e.g. polyoxymethylene
g) polyphenylene oxides and blends with polystyrene and/or polyamides
h) polyurethanes, in particular linear polyurethanes
i) polyamides, such as e.g. polyamide 6, 6.6, 6.10, 4.6, 6.12, 12.12, polyamide 11, polyamide 12 and also (partially) aromatic polyamides, such as e.g. polyphthalamides
j) polyimides, polyamide imides, polyether imides, polyketones, polysulphones, polyether sulphones, polyphenylene sulphide, polybenzimidazoles
k) polyesters, such as e.g. polyethylene terephthalate (PET), polypropylene terephthalate, polybutylene terephthalate (PBT) and polylactic acid (PLA)
l) polycarbonate
m) cellulose derivatives, such as e.g. cellulose nitrate, cellulose acetate, cellulose propionate
n) and also mixtures, combinations or blends of two or more of the previously mentioned polymers.

3. Polymer composition according to one of the preceding claims, **characterised in that** the carbon nanotubes are selected from the group consisting of multiwall carbon nanotubes.

4. Polymer composition according to one of the preceding claims, **characterised in that** the phenols are selected from the group consisting of compounds of the subsequently illustrated formula 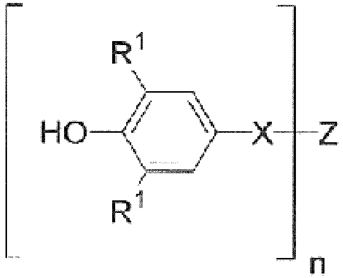
R¹ being the same or different with each occurrence and being selected from the group consisting of linear or branched alkyl radicals with 1 to 8 carbon atoms, in particular tert-butyl or methyl; or hydrogen,
X being selected from the group consisting of alkylene radicals, alkylene-carbonyl radicals, alkylene-amide radicals,
N being 1 to 4, and
Z in the case where n = 1 being hydrogen, in the case where n = 2 being a chemical bond or an alkylene, in the case where n = 3 being an alkinyl or in the case where n = 4 being a carbon atom.

5. Polymer composition according to one of the preceding claims, **characterised in that** the phosphites and/or phosphonites are selected from compounds of the subsequently illustrated formulae 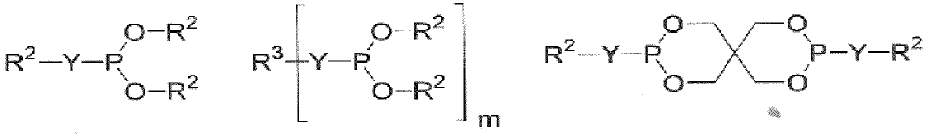 respectively
R² being the same or different with each occurrence and being selected from the group consisting of alkyl-, aryl- or alkylated aryl substituents, in the case where two -O-R² substituents are bonded to one phosphorus atom, two radicals R² also being able to be bonded together to form a ring system,
Y being oxygen or a chemical bond,
m being 1 or 2,
R³ in the case where m = 1 being an alkyl- or aryl radical, or in the case where m = 2 being an alkylene- or arylene radical.

6. Polymer composition according to one of the preceding claims, **characterised in that** the metal deactivators are selected from the group consisting of N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoylbisphenyl hydrazide, N,N'-diacetyladipoyl dihydrazide, N,N'-bis(salicyloyl)oxylyl dihydrazide, N,N'-bis(salicyloyl)thiopropionyl dihydrazide and also mixtures or combinations hereof.

7. Polymer composition according to one of the preceding claims, **characterised in that** the mono- or polyfunctional epoxide compounds comprise a grouping of the subsequently illustrated formula: 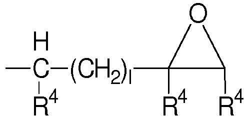
R⁴ being the same or different with each occurrence and being selected from the group consisting of hydrogen or linear or branched alkyl radicals with 1 to 8 carbon atoms, and
I being 0 or 1.

8. Polymer composition according to the preceding claim, **characterised in that** the grouping is bonded to a polymer or copolymer, in particular that the mono- or polyfunctional epoxide compound concerns a poly(meth)acrylic acid derivative, which is functionalised with the grouping, or a copolymer hereof, preferably a copolymer with styrene or (meth)acrylic acid compounds.

9. Polymer composition according to one of the preceding claims, **characterised in that** at least one additive is contained, selected from the group of nucleation agents, in particular sorbitol derivatives and/or trisamides; flameproofing agents, in particular halogen-free flameproofing agents based on phosphorus- and nitrogen compounds; acid collectors, in particular salts of long-chain fatty acids, in particular calcium stearate or zinc stearate or hydrotalcites; and/or stabilisers from the group of hindered amines, preferably N-alkoxyamine derivatives.

10. Polymer composition according to one of the preceding claims, comprising or consisting of, relative to the total composition,
a) 82 to 99.7% by weight of the at least one thermoplastic polymer or of the blend of at least two thermoplastic polymers,
b) 0.2 to 11% by weight of carbon nanotubes,
c) 0.05 to 1.0% by weight of the at least one antioxidant, and also
d) 0.05 to 3% by weight of the at least one metal deactivator and/or of the at least one mono- or polyfunctional epoxide compound, and also
e) 0 to 3% by weight of the at least one additive.

11. Method for stabilisation of polymers, in which a polymer composition according to one of the claims 1 to 10 is blended into a polymer.

12. Method according to the preceding claim, **characterised in that** the polymers are thermoplastic polymers and are selected in particular from the group consisting of polypropylene, polyethylene and copolymers thereof, polystyrenes and copolymers, such as acrylonitrile-butadiene-styrene (ABS), styrene-butadiene (SB), and styrene-butadiene-styrene (SBS), polyurethanes, polyamides, polyesters, polycarbonates and/or mixtures or blends hereof.

13. Method according to one of the two preceding claims, **characterised in that**, relative to 100% parts by weight of the polymer, 5 to 300 parts by weight of the polymer composition are blended in.

14. Moulded part, producible from a polymer composition according to one of the claims 1 to 10, or a method according to one of the claims 11 to 13, in the form of injection-moulded parts, foils, films, coatings, foams, fibres, cables and pipes in the electrical/electronics industry, in the field of transport and building, in the packaging industry, in the case of household appliances, consumer articles, furniture, sports apparatus, textile applications, varnishes and paints.

## Revendications

1. Composition de polymères présentant une stabilité accrue à long terme, contenant
a) au moins un polymère thermoplastique ou un mélange d'au moins deux polymères thermoplastiques,
b) des nanotubes de carbone,
c) au moins un antioxydant, choisi dans le groupe consistant en les phénols, les phosphites et/ou phosphonites, les amines choisies dans le groupe consistant en la N,N'-di-isopropyl-p-phénylènediamine, la N,N'-di-sec-butyl-p-phénylènediamine, la N,N'-bis(1,4-diméthylpentyl)-p-phénylène-diamine, la N,N'-bis(1-éthyl-3-méthylpentyl)-p-phénylènediamine, la N,N'-bis(1-méthylheptyl)-p-phénylènediamine, la N,N'-dicyclohexyl-p-phénylènediamine, la N,N'-diphényl-p-phénylènediamine, la N,N'-bis(2-naphtyl)-p-phénylènediamine, la N-isopropyl-N'-phényl-p-phénylènediamine, la N-(1,3-diméthyl-butyl)-N'-phényl-p-phénylène-diamine, la N-(1 -méthylheptyl)-N'-phényl-p-phénylènediamine, la N-cyclohexyl-N'-phényl-p-phénylènediamine, la 4-(p-toluènesulfamoyl)diphénylamine, la N,N'-diméthyl-N,N'-di-sec-butyl-p-phénylènediamine, la diphénylamine, la N-allyldiphényl-amine, la 4-isopropoxydiphénylamine, la N-phényl-1-naphtylamine, la N-(4-tert-octylphényl)-1-naphtylamine, la N-phényl-2-naphtylamine, la diphénylamine octylée, p.ex. la p,p'-di-tert-octyldiphénylamine, le 4-n-butylamino-phénol, le 4-butyrylaminophénol, le 4-nonanoylamino-phénol, le 4-dodécanoylaminophénol, le 4-octadécanoylaminophénol, la bis(4-méthoxy-phényl)amine, le 2,6-di-tert-butyl-4-diméthylaminométhyl-phénol, le 2,4'-diaminodiphénylméthane, le 4,4'-diaminodiphénylméthane, le N,N,N',N'-tétraméthyl-4,4'-diaminodiphénylméthane, le 1,2-bis[(2-méthyl-phényl)-amino]éthane, le 1,2-bis(phénylamino)propane, le (o-tolyl)biguanide, la bis[4-(1',3'-diméthylbutyl)-phényl]amine, la N-phényl-1-naphtylamine tert-octylée, un mélange de tert-butyl/tert-octyldiphénylamines mono- et dialkylées, un mélange de nonyldiphénylamines mono- et dialkylées, un mélange de dodécyldiphénylamines mono- et dialkylées, un mélange d'isopropyl/isohexyl-diphénylamines mono- et dialkylées, un mélange de tert-butyldiphénylamines mono- et dialkylées, la 2,3-dihydro-3,3-diméthyl-4H-1,4-benzothiazine, la phénothiazine, un mélange de tert-butyl/tert-octylphénothiazines mono- et dialkylées, un mélange de tert-octylphénothiazines mono- et dialkylées, la N-allylphénothiazine, le N,N,N',N'-tétraphényl-1,4-diaminobut-2-ène, ainsi que les mélanges ou combinaisons de ceux-ci ; ou des mélanges ou des combinaisons de ceux-ci, ainsi que
d) au moins un désactivateur de métaux et/ou au moins un composé époxyde mono- ou polyfonctionnel,
ou en étant constituée.

2. Composition de polymères selon la revendication 1, **caractérisée en ce que** l'au moins un polymère thermoplastique est choisi dans le groupe consistant en
a) les polymères d'oléfines ou de dioléfines, en particulier le polyéthylène (PEBD, PEBDL, VLDPE, MDPE, PEHD, mPE), le polypropylène, le polyisobutylène, le poly-4-méthyl-pentène-1, le polybutadiène, le polyisoprène, le polycyclooctène, ainsi que les copolymères à base de polyoléfines sous forme de structures statistiques ou en blocs, tels que p.ex. le polypropylène-polyéthylène (EP), l'EPM ou l'EPDM, l'éthylène-acétate de vinyle (EVA), l'éthylène-ester de l'acide acrylique,
b) le polystyrène, le polyméthylstyrène, le styrène-butadiène, le poly(styrène-butadiène-styrène) (SBS), le poly(styrène-isoprène), le poly(styrène-isoprène-styrène) (SIS), le poly(styrène-butadiène-acrylonitrile) (ABS), le poly(styrène-acrylonitrile-acrylate) (ASA), le poly(méthacrylate-butadiène-styrène) (MBS), les polymères styrène-anhydride maléique, en particulier les copolymères greffés correspondants, tels que p.ex. styrène sur butadiène, ou anhydride maléique sur SBS, ainsi que les polymères hydrogénés pouvant être obtenus à partir d'eux, tels que p.ex. le poly(styrène-éthylène-butylène-styrène),
c) les polymères halogénés, en particulier le poly(chlorure de vinyle), le poly(chlorure de vinylidène) et/ou le polyéthylène chloré,
d) les polymères d'esters insaturés, tels que p.ex. les polyacrylates et les polyméthacrylates tels que le PMMA, le polyacrylonitrile et/ou le polyamide,
e) les polymères d'alcools insaturés et de leurs dérivés, tels que p.ex. le poly(alcool vinylique), le poly(acétate de vinyle), le poly(butyral vinylique),
f) les polyacétals, tels que p.ex. le polyoxyméthylène,
g) les poly(oxydes de phénylène) et les mélanges avec le polystyrène et/ou les polyamides,
h) les polyuréthannes, en particulier les polyuréthannes linéaires,
i) les polyamides, tels que p.ex. les polyamides-6, 6.6., 6.10. 4.6, 6.12, 12.12, le polyamide 11, le polyamide 12, ainsi que les polyamides (partiellement) aromatiques, tels que p.ex. les polyphtalamides,
j) les polyimides, les polyamide-imides, les polyétherimides, les polycétones, les polysulfones, les polyéthersulfones, le poly(sulfure de phénylène), les polybenzimidazoles,
k) les polyesters, tels que p.ex. le poly(téréphtalate d'éthylène) (PET), le poly(téréphtalate de propylène), le poly(téréphtalate de butylène) (PBT) et le poly(acide lactique) (PLA),
l) le polycarbonate,
m) les dérivés de la cellulose, tels que p.ex. le nitrate de cellulose, l'acétate de cellulose, le propionate de cellulose,
n) ainsi que les mélanges, combinaisons ou mélanges mécaniques de deux des polymères mentionnés ci-dessus, ou plus.

3. Composition de polymères selon l'une des revendications précédentes, **caractérisée en ce que** les nanotubes de carbone sont choisis dans le groupe consistant en les nanotubes de carbone multi-parois.

4. Composition de polymères selon l'une des revendications précédentes, **caractérisée en ce que** les phénols sont choisis dans le groupe consistant en les composés ayant la formule représentée ci-après 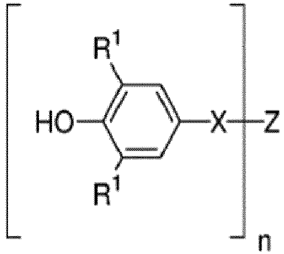 dans laquelle
R¹ à chaque occurrence, est identique ou différent et est choisi dans le groupe consistant en les radicaux alkyle à chaîne droite ou ramifiée ayant 1 à 8 atomes de carbone, en particulier le groupe tert-butyle ou méthyle ; ou l'atome d'hydrogène,
X est choisi dans le groupe consistant en les radicaux alkylène, les radicaux alkylène-carbonyle, les radicaux alkylène-amide,
n vaut 1 à 4, et
Z est dans le cas dans lequel n = 1, un atome d'hydrogène ; dans le cas dans lequel n = 2, une liaison chimique ou un alkylène ; dans le cas dans lequel n = 3, un alcynyle ; ou dans le cas dans lequel n = 4, un atome de carbone.

5. Composition de polymères selon l'une des revendications précédentes, **caractérisée en ce que** les phosphites et/ou les phosphonites sont choisis parmi les composés ayant les formules représentées ci-après 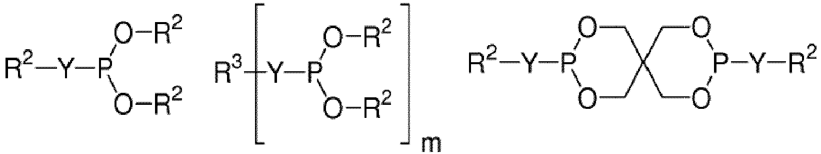 dans chacune desquelles
R² à chaque occurrence, est identique ou différent, et est choisi dans le groupe consistant en les substituants alkyle, aryle ou aryle alkylé, et, dans le cas dans lequel deux substituants -O-R² sont liés à l'atome de phosphore, deux radicaux R² peuvent aussi être reliés l'un à l'autre pour former un système cyclique,
Y représente un atome d'oxygène ou une liaison chimique,
m vaut 1 ou 2,
R³ est, dans le cas dans lequel m = 1, un radical alkyle ou aryle ; ou dans le cas dans lequel m = 2, un radical alkylène ou arylène.

6. Composition de polymères selon l'une des revendications précédentes, **caractérisée en ce que** les désactivateurs de métaux sont choisis dans le groupe consistant en le N,N'-diphényloxamide, la N-salicylal-N'-salicyloylhydrazine, la N,N'-bis(salicyloyl)hydrazine, la N,N'-bis(3,5-di-tert-butyl-4-hydroxyphénylpropionyl)hydrazine, le 3-salicyloylamino-1,2,4-triazole, le dihydrazide de bis(benzylidène)oxalyle, l'oxanilide, le dihydrazide d'isophtaloyle, l'hydrazide de sébaçoylbisphényle, le dihydrazide de N,N'-diacétyladipoyle, le dihydrazide de N,N'-bis(salicyloyl)oxylyle, le dihydrazide de N,N'-bis(salicyloyl)thiopropionyle, ainsi que les mélanges ou combinaisons de ceux-ci.

7. Composition de polymères selon l'une des revendications précédentes, **caractérisée en ce que** les composés époxyde mono- ou polyfonctionnels comprennent un groupement ayant la formule présentée ci-après 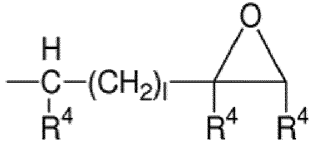 dans laquelle
R⁴ à chaque occurrence, est identique ou différent, et est choisi dans le groupe consistant en l'atome d'hydrogène ou les radicaux alkyle à chaîne droite ou ramifiée ayant 1 à 8 atomes de carbone, et
I vaut 0 ou 1.

8. Composition de polymères selon la revendication précédente, **caractérisée en ce que** le groupement est lié à un polymère ou à un copolymère, en particulier **en ce que**, pour ce qui concerne le composé époxyde mono- ou polyfonctionnel, il s'agit d'un dérivé du poly(acide(méth)acrylique) ou d'un copolymère de celui-ci, fonctionnalisé par le groupement, de préférence d'un copolymère avec du styrène ou des composés de l'acide (méth)acrylique.

9. Composition de polymères selon l'une des revendications précédentes, **caractérisée en ce qu'**elle contient au moins un additif choisi dans le groupe consistant en les agents de nucléation, en particulier les dérivés du sorbitol et/ou les trisamides ; les retardateurs de flamme, en particulier les retardateurs de flamme non halogénés à base de composés du phosphore et de l'azote ; les fixateurs d'acides, en particulier les sels d'acides gras à longue chaîne, en particulier le stéarate de calcium ou le stéarate de zinc ou les hydrotalcites ; et/ou les stabilisants du groupe des amines à empêchement stérique, en particulier les dérivés de N-alcoxyamines.

10. Composition de polymères selon l'une des revendications précédentes, contenant, par rapport à la composition totale,
a) 82 à 99,7 % en poids de l'au moins un polymère thermoplastique ou du mélange d'au moins deux polymères thermoplastiques,
b) 0,2 à 11 % en poids de nanotubes de carbone,
c) 0,05 à 1,0 % en poids de l'au moins un antioxydant, ainsi que
d) 0,05 à 3 % en poids de l'au moins un désactivateur de métaux et/ou de l'au moins un composé époxyde mono- ou polyfonctionnel, ainsi que
e) 0 à 3 % en poids de l'au moins un additif,
ou en étant constituée.

11. Procédé pour stabiliser des polymères, dans lequel on ajoute à un polymère, en mélangeant, une composition de polymères selon l'une des revendications 1 à 10.

12. Procédé selon la revendication précédente, **caractérisé en ce que** les polymères sont des polymères thermoplastiques et sont en particulier choisis dans le groupe consistant en le polypropylène, le polyéthylène et leurs copolymères, les polystyrènes et leurs copolymères tels que l'acrylonitrile-butadiène-styrène (ABS), le styrène-butadiène (SB) et le styrène-butadiène-styrène (SBS), les polyuréthannes, les polyamides, les polyesters, les polycarbonates et/ou les mélanges ou mélanges mécaniques de ceux-ci.

13. Procédé selon l'une des deux revendications précédentes, **caractérisé en ce qu'**on ajoute en mélangeant, pour 100 parties en poids du polymère, 5 à 300 parties en poids de la composition de polymères.

14. Objet moulé, pouvant être fabriqué à partir d'une composition de polymères selon l'une des revendications 1 à 10 ou par un procédé selon l'une des revendications 11 à 13 sous forme de pièces moulées par injection, de feuilles, de films, de revêtements, de mousses, de fibres, de câbles et de tubes de l'industrie électrique/électronique, dans le transport et la construction, dans l'industrie de l'emballage, dans les appareils ménagers, les articles de grande consommation, les meubles, les équipements sportifs, les applications textiles, les peintures et vernis.
